# EUROPEAN PATENT APPLICATION

(11) **EP 4 246 012 A1**
(43) Date of publication of application: **20.09.2023**
(21) Application number: 23152216.0
(22) Date of filing: 18.01.2023
(51) Int. Cl.: F16H 3/10, B62M 11/14, B62M 11/16, F16D 41/14, F16D 41/26, F16D 41/30, F16H 3/083

(54) **FLEXIBLE CLUTCH TRANSMISSION MECHANISM**

(30) Priority: 16.03.2022 TW 111109717; 16.03.2022 TW 111202633 U
(71) Applicant: ChargeON Corp., Tainan City 700401 (TW)
(72) Inventor: TSAI, CHUNG-LIN, 700401 Tainan City (TW); WU, CHIH-HUNG, 700401 Tainan City (TW); WEN, WEI-SHIANG, 700401 Tainan City (TW); CHUNG, XIANG-HONG, 700401 Tainan City (TW)
(74) Representative: Jannig & Repkow Patentanwälte PartG mbB

(57) **Abstract**

A flexible clutch transmission mechanism includes an axle, a shifter and a movable ring which is mounted to the shifter and movable along the axle. The movable ring includes a lip on one end thereof. Multiple clutches each have multiple pawls and a resilient member that is located corresponding to the lip. Multiple gear sets each have ratchets. When changing gears, a shifting device drives the shifter and the movable ring moves. The lip of the movable ring contacts the correspondent resilient member. The pawls expand outward and are engaged with and uni-directionally drive the ratchets of the gear set. The rest of the gear sets are not activated. By the flange of the driving part or the contact parts, the gear sets rotate at different speeds, and the adjacent gear sets are connected with each other by friction, an extra assistant force is created to quickly make gear changing.

## Description

### BACKGROUND OF THE INVENTION

### 1. Fields of the invention

The present invention relates to a flexible clutch transmission mechanism, and more particularly, to a bike flexible clutch transmission mechanism that shifts different speeds by axially driving a movable ring.

### 2. Descriptions of Related Art

Environmental protection and fitness become a main stream for everyone so that, energy-saving and carbon-reducing policies are planned and encouraged to reduce energy demand and pollution problems. Therefore, riding bicycles is recognized as one of the solutions to achieve the above mentioned goals, and is used as a substitute for transportation or sports and leisure. Various transmission devices have been developed to meet the needs of various road conditions when riding bicycles.

In order to cope with the development of electric assisted bicycles, automation and intelligence of riding manipulation are important research points. The external transmission systems must be able to complete the shift while the bicycles are moving, and it cannot change over multiple gears and the chain may drop off from the gears.

Most of the internal transmission devices use the planet gear transmission mechanism, and simultaneously control multiple pawls for clutch control to restrict rotation of the target part relative to the axle. Although this mechanism has a wider speeds range, the mechanism is complicated with a significant number of parts, the precision standard for every part is high, and the cost is high. In addition, the pawl has a certain self-locking function when it is engaged, which creates a larger resistance when changing the pawls between different gears. The high resistance also causes difficulties when being cooperated with an electronic gear shifting device due to the load on the claws caused by the gear shifting when stepping on the pedal. It is even more severe when operating multiple pawls at the same time. The more streamlined structure, the lower cost and the lighter shift resistance make it suitable for electronic shift manipulation, which is an urgent goal for the industry to break through.

The present invention intends to provide a flexible clutch transmission mechanism to eliminate the shortcomings mentioned above.

### SUMMARY OF THE INVENTION

The present invention provides a flexible clutch transmission mechanism that has a simple structure, reliable, and is easily manufactured and assembled. The flexible clutch transmission mechanism proceeds one-direction clutch control and reduces friction when changing gears. The flexible clutch transmission mechanism of the present invention comprises an axle, a shifter and a movable ring which is mounted to the shifter and movable along the axle. The movable ring includes a lip extending from one end thereof. At least one clutch has at least one pawl which includes a resilient member located corresponding to the lip. At least one clip is engaged with the at least one pawl and located opposite to the resilient member. At least one gear set includes ratchets which are located corresponding to the at least one pawl. When in a non-transmission status, the lip does not contact the resilient member. The at least one pawl is not engaged with the ratchets. When in a transmission status, the lip contacts the resilient member of the at least one clutch so that the at least one pawl expands outward and is uni-directionally engaged with and drives the ratchets.

Preferably, the at least one pawl includes an end face. The resilient member includes a first arm and a second arm. The first and second arms are connected to a bridge. The first arm is engaged with the at least one pawl and located opposite to the end face. When in the transmission status, the second arm contacts the lip. The at least one pawl expands outward and engaged with the ratchets in the one direction.

Preferably, the clutch includes at least one clip that is engaged with the at least one pawl and located opposite to the resilient member. When in a non-transmission status, the at least one clip is retracted inward to bias the at least one pawl. The at least one pawl is not engaged with the ratchets.

Preferably, the at least one pawl includes a notch. The bridge includes a gap. The clip is resiliently engaged with the notch and the gap.

Preferably, the gear set is mounted to a driving part, and the movable ring is axially movable in the driving part. The driving part includes an axial groove which is located corresponding to the clutch and the movable ring. The second arm extends into the driving part via the axial grieve. When in the transmission status, the lip contacts the second arm.

Preferably, a flange is mounted to one end the driving part and axially contacts the at least one gear set.

Preferably, a slide is located between any two adjacent of the gear sets. The slide is located corresponding to the lip. The slide includes a contact part located opposite to the lip. The contact part includes at least one first abutting member. The at least one gear set includes a second abutting member which is located corresponding to the at least one first abutting member. When the lip contacts the slide, the slide contacts the contact part so that the at least one abutting member is engaged with the second abutting member.

Preferably, the at least one gear set includes a sun gear and at least one planet gear. The ratchets are formed in the inner periphery of the sun gear.

Preferably, the axle includes a slot defined radially in the outer periphery thereof. The movable ring is movably mounted to the axle and restricted in the slot.

Preferably, the shifter includes a spiral path defined in the outer periphery thereof. When the shifter rotates, the spiral path drives the movable ring.

Preferably, a shifting device is connected to and drives the shifter so as to axially move the movable ring. The shifting device is driven electronically or manually. When the shifting device is driven electronically, the shifting device is a Direct Current motor or a stepper motor. When the shifting device is driven manually, the shifting device is a cable.

The present invention has the following advantages which are that when changing gears, the shifting device drives the shifter, and the movable ring moves to a clutch that is located at a corresponding gear position. The lip of the movable ring contacts the resilient member of the corresponding clutch so as to expand the paw outward and uni-directionally engaged with the ratchet of the gear set to change the gears. The clutch that is not located corresponding the movable ring, the ratchets are not engaged with the gear set, so that the clutch that is not located corresponding to the movable ring does not interfere the gear set. The way of changing gears of the present invention uses gear transmission which is simple and reliable so that the number of the transmission parts is minimized. Therefore, the present invention is light in weight and has high transmission efficiency, and is easily assembled and manufactured. The sequential arrangement of the parts of the present invention makes the gear changing easier, and does not need to control multiple clutches in the same time. Therefore, only limited pawls are cooperated with the clutch such that the operation of the pawls generates less resistance. The gear changing is smooth and quick, while less resistance is occurred. The number and complexity of parts is reduced, and the manufacturing cost is reduced as well.

By the flange or the contact part, the gear sets rotate at different speeds, and the adjacent gear sets are connected with each other by friction from the flange or the contact part, an extra assistant force is created to make the gear changing easier, and the flexible clutch transmission mechanism can be made compact in size.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a cross sectional view of the flexible clutch transmission mechanism of the present invention;
Fig. 2 is an exploded view of the flexible clutch transmission mechanism of the present invention;

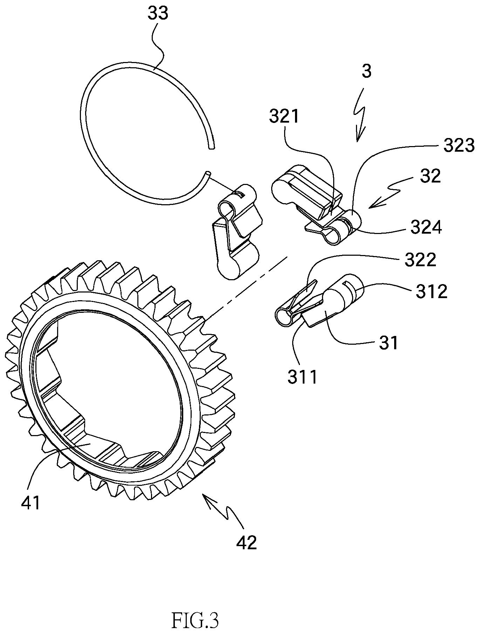

Fig. 3 shows the clutch of the flexible clutch transmission mechanism of the present invention;
Fig. 4 shows that when making a gear changing, the movable ring moves and the pawls are engaged with the ratchets;
Fig. 5 shows that when making a gear changing, the pawls are not engaged with the ratchets;
Fig. 6 shows that when making a gear changing, the movable ring is in non-transmission status, the clips make the pawls be separated from the ratchets;
Fig. 7 shows that the flexible clutch transmission mechanism of the present invention includes the slides and the contact parts;
Fig. 8 shows that when lower a gear, friction assists the pawls at a higher gear position to be separated from the ratchets, and
Fig. 9 shows the status of the flexible clutch transmission mechanism as shown in Fig. 7 when the movable ring is in transmission status.

### DETAILED DESCRIPTION OF THE PREFERRED EMBODIMENT

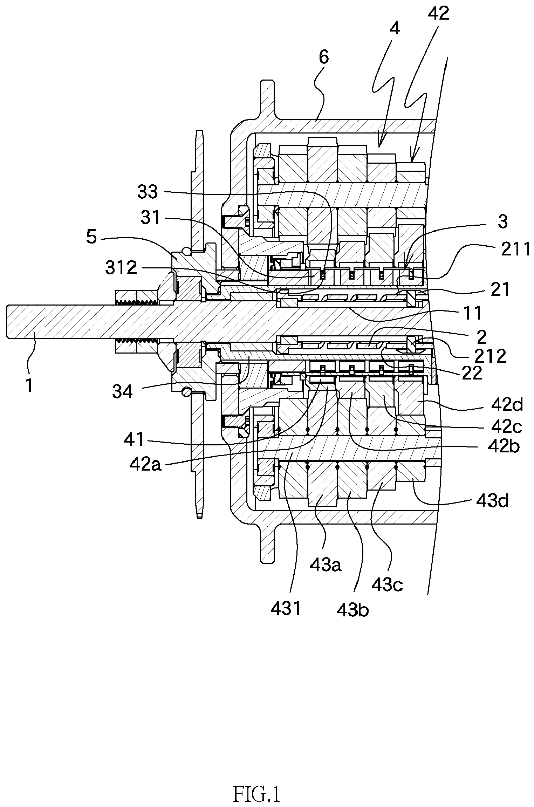

Referring to Fig. 1, the flexible clutch transmission mechanism of the present invention comprises an axle 1 which is installed to a bicycle or to a housing and cannot rotate.

A shifter 2 which is axially connected to a movable ring 21 and the movable ring 21 is mounted to and driven by the shifter 2. The movable ring 21 is movable along the axle 1 and includes a lip 211 extending from one end thereof. In one embodiment, in order to restrict the axial distance that the movable ring 21 moves, the axle 1 includes a slot 11 defined radially in the outer periphery thereof. The movable ring 21 is movably mounted to the axle 1 and restricted in the slot 11. In one embodiment, by the movable ring 21 itself, or by using a pin 212 such as a flat key or a pin is used to restrict the movable ring 21to be only axially movable in the slot 11.

At least one clutch 3 has at least one pawl 31 which includes a resilient member 32 located corresponding to the lip 211. The lip 211 can be a tapered lip or an inclined surface so that when the movable ring 21 axially moves, the resilient member 32 is pushed by the movable ring 21.

At least one gear set 4 having ratchets 41 which are located corresponding to the at least one pawl 31.

When in a non-transmission status, the lip 211 does not contact the resilient member 32, and the pawl 31 is not engaged with the ratchets 41. When in a transmission status, the lip 211 contacts the resilient member 32 of the at least one clutch 3 to expand the pawl 31 outward and is uni-directionally engaged with the ratchet 41 to make a gear changing by the gear set 4.

For the transmission between the shifter and the movable ring 21, a shifting device (not shown) that is connected to and drives the shifter 2 so as to axially move the movable ring 21. The shifter 2 includes a spiral path 22 defined in the outer periphery thereof. The shifter 2 rotates to make the spiral path 22 drive the movable ring 21. Therefore, by rotating the shifter 2 of the shifting device, the movable ring 21 moves back and forth axially. In another embodiment, the shifter 2 can be controlled by way of linear drive to directly move the movable ring 21. When using the linear drive to control the shifter 2, the shifter 2 does not need the spiral path 22.

The shifting device can be driven electronically or manually. When the shifting device is driven electronically, the shifting device is a Direct Current motor or a stepper motor. When the shifting device is driven manually, the shifting device is a cable. In addition, the shifting device can be controlled by commands by way of cabled or wireless. When using the DC motor, a potentiometer, a Hall sensor, an encoder and a current sensor are used to ensure to have a precise angle or distance to control the travel of the movable ring 21. The users may choose a gear electronically or manually, to allow the shifter device to control the position of the movable ring 21 on the axle 1 to control the gear changing.

For the arrangement of the pawls 31, in order to allow the movable ring 21 to be axially moved in the transmission status, the pawls 31 can be expanded to be engaged with the ratchets 41. In one embodiment, the at least one pawl 31 includes an end face 311 located corresponding to the ratchets 41. The at least one pawl 31 uni-directionally drives the ratchets 41, so that the ratchets 41 are designed to be driven in one direction. Therefore, the end face 311 is restricted to drive the ratchets 41 in one direction. On the contrary, when the pawl 31 moves in the opposite direction, the pawl 31 is freely move and cannot drive the ratchets 41, which is well known in the art. The resilient member 32 includes a first arm 321 and a second arm 322. The first and second arms 321, 322 are connected to a bridge 323. The first arm 321 is engaged with the at least one pawl 31 and located opposite to the end face 311. when in the transmission status, the second arm 322 contacts the lip 211, the at least one pawl 31 expands outward by the first arm 321 and the bridge 323 so as to be engaged with the ratchets 41 uni-directionally.

When in the un-transmission status, the at least one pal 31 retracts and does not expand outward to avoid from interfering the movement of the ratchets 41 and the clutch 3. In one embodiment, at least one clip 33 is engaged with the at least one pawl 31 and located opposite to the resilient member 32. When in a non-transmission status, the at least one clip 33 is retracted inward to press the at least one pawl 31 which is not engaged with the ratchets 41. The resilient force of the clip 33 is greater than sliding friction force of the resilient member 32 when the resilient member 32 is not in contact with the lip 211. When in a transmission status, in order to ensure that the lip 211 contacts the resilient member 32, and the resilient member 32 is pushed by the lip 211 to let the at least one pawl 31 expand radially and outward and is uni-directionally engaged with and drives the ratchets 41. The resilient force of the resilient member 32 has to be greater than the resilient force that makes the clip 33 retract to ensure the resilient member 32 to drive the ratchets 41 in the transmission status.

The at least one pawl 31 includes a notch 312, and the bridge 323 includes a gap 324. The clip 33 is resiliently engaged with the notch 312 and the gap 324, so as to ensure that the clip 33 applies a force to the at least one pawl 31.

For the power transmission, the gear set 4 is movably mounted to a driving part 34, but no transmission relationship is established between the gear set 4 and the driving part 34. The movable ring 21 is axially movable in the driving part 34. The driving part 34 includes an axial groove 341 which is located corresponding to the clutch 3 and the movable ring 21. The second arm 322 extends into the driving part 34 via the axial groove 341. When in the transmission status, the lip 211 contacts the second arm 322. The driving part 34 is connected with an input device 5 which drives the driving part 34 and the at least one paw 31 via the axial groove 341. In the transmission status, the at least one pawl 31 is pushed by the lip 211 to be engaged with the ratchets 41, so as to change gears by the gear ratio of the gear set 4.

For the mutual transmission between the pawl 31 and the driving part 34, in order to position the pawl 31 under the un-transmission status, in one embodiment, the axial groove 341 of the driving part 34 includes a room 342 and a recess 343 respectively located on two sides of the axial groove 341. The at least one pawl 31 has one end opposite to the end face 311 is located in the room 342, the bridge 323 is located in the recess 343.

For the arrangement of the gear sets 4, in one embodiment, the gear sets 4 each include a sun gear 42 and at least one planet gear 43 which is located corresponding to the sun gear 42. The sun gear 42 includes the ratchets 41 formed to the inner periphery thereof. By the number and the gear ratio of the sun gear 42 and the planet gears 43, the gear set 4 establishes multiple gears to be changed. In on embodiment, the axle 1 is installed to a planet frame 6, the gear set 4 and the clutch 3 are located in the planet frame 6. The planet frame 6 also defines the central distance of the rotation of the planet gears 43. The planet gears 43 of different gear sets 4 are engaged with each other by a mandrel 431. The number of the gear sets 4 and the clutches 3 can be set according to the number of gears of the flexible clutch transmission mechanism. In this embodiment, there are four gear sets 4 and four clutches 3.

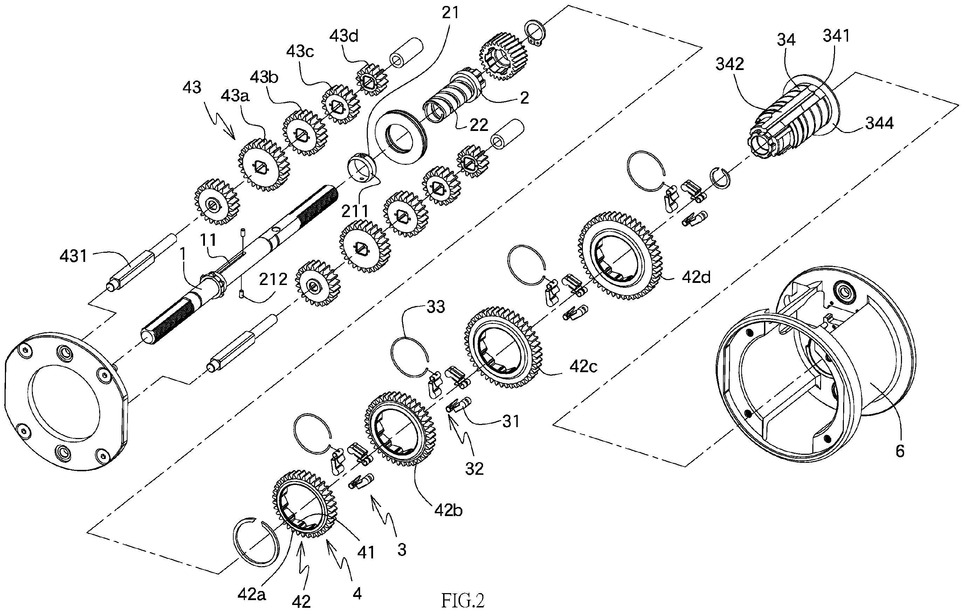

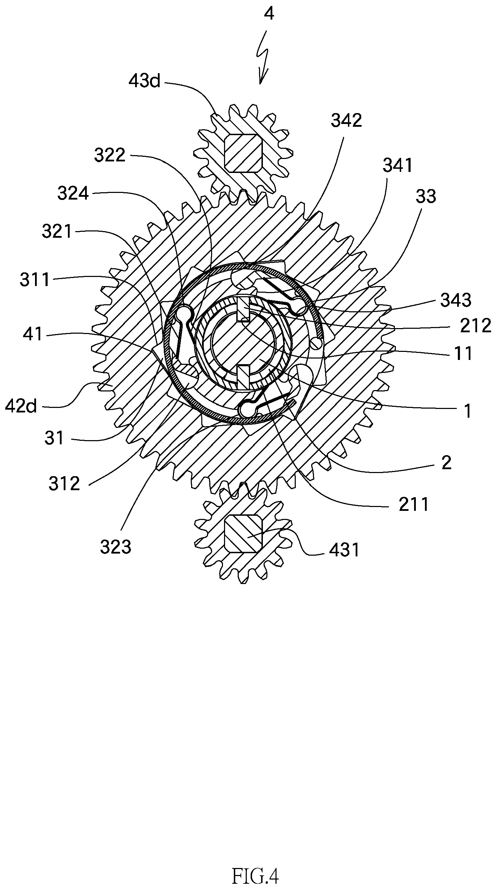

For the arrangement of the gear sets 4, the gear sets 4 can be set according to the gears from low to high or from high to low. The sun gears 42a to 42d are arranged axially in sequence from gear one to gear four. The planet gears 43a to 43d are located corresponding to the sun gears 42a to 42d. The sun gears 42a to 42d are located to the corresponding pawls 321 of eth clutches 3. As shown in Figs. 1 and 2, when changing to gear four, the shifter 2 moves the movable ring 21 to the position where the pawls 31 of the clutch 3 are located corresponding to the sun gear 42d. As shown in Fig. 4, the lip 211 contacts the second arm 322, by the resilient force between the first arm 321, the second arm 322 and the bridge 323, the pawl 31 expands radially and outward, and protrudes beyond the driving part 34. The pawl 31 is engaged with the ratchet 41 of the sun gear 42d so as to drive the sun gear 42d and the planet gear 43d via the pawl 31 and the driving part 34. Because the mandrel 431 is not a round mandrel, so that the planet gear 43d transfers power to the mandrel 431 which drives the planet gears 43 mounted to the mandrel 431 at the same speed. Therefore, the planet gears 43a to 43c also transfer to the sun gears 42a to 42c of gear one to gear three. However, because the transmission mechanism is at gear four, so that the pawls 31 of gear one to gear three are in non-transmission status. That means the pawls 31 are not engaged with the ratchets 41, and the sun gears 42a to 42c freely rotate relative to the driving part 34 and do not interfere the operation of gear four.

During gear changing, as shown in Figs. 1 and 4, when the movable ring 21 moves from gear three to gear four, or from gear four to gear three, before the movable ring 21 removes from the current gear, it contacts the resilient member 32 of the target gear so that the resilient member 32 pushes the corresponding pawl 31 to expand outward. Although the pawls 31 of the current gear and the target gear both expand outward, the number of teeth of the sun gear 42 and the planet gears 43 of the current gear and the target gear are different from each other, the gear ratio of the planet gears 43 transferring to the sun gear 42 of the lower gear is larger than that of the higher gear, so that the pawl 31 is engaged with the sun gear 42 of the higher gear, and the sun gear 42 of the lower gear rotates faster than the mandrel 34, the ratchets 41 will push eth pawl 31 to compress the resilient member 32 to disengage the pawl 31 from the ratchets 41. In other words, the gear changes while the target gear is activated, by the flexible clutch, the gear changing does not have idling or transmission locked situation. The present invention does not need multiple clutches to control gaps, so as to shorten the response time of gear changing.

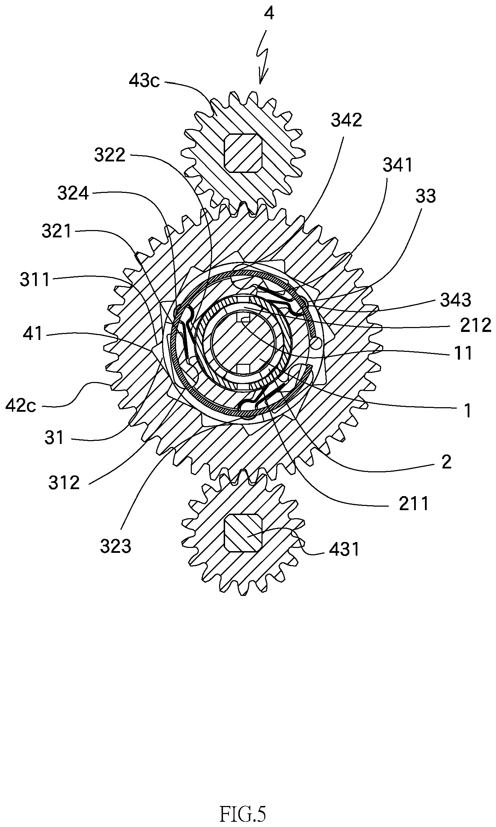

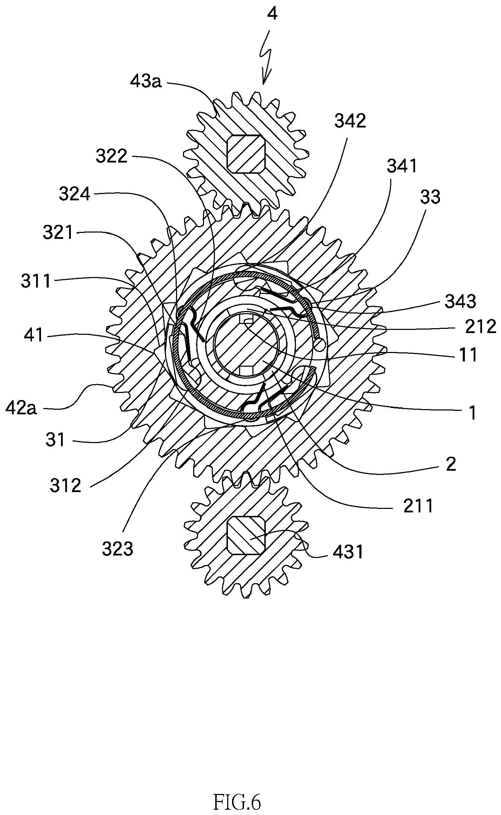

As shown in Figs. 4 to 6, during the gear changing mentioned above, when the movable ring 21 pushes the resilient member 32 to expand the clip 33 and the pawl 31 outward, and the pawl 31 is engaged with the ratchet 41 of the sun gear 42 of gear four, the driving part 34 drives the sun gear 42d of the gar four clockwise simultaneously. As shown in Fig. 4, during the gear changing, the movable ring 21 also pushes the resilient member 32 that is moving to expand the pawl 31 and the clip 33. However, because the sun gear 42c of gear three also rotates clockwise, and the rotational speed of the sun gear 42c is greater than that of the driving part 34, so that the ratchet 41 of the sun gear 42c pushes the pawl 31 corresponding thereto to compress the resilient member 32 so that the pawl 31 is separated from the ratchet 41 of the sun gear 42c. As shown in Fig. 5, for the clutches 3 and the gear sets 4 not in the gear changing process, because the resilient member 32 is not pushed by the movable ring 21 so that clip 33 retracts the pawl 31 corresponding thereto into the driving part 34, and the sun gears 42a, 42b are separated from the driving part 34 as shown in Fig. 6. Therefore, when changing to a specific gear, only the correspondent gear set 4 and the clutch 3 have mutual transmission, the sun gears 42 of the rest of the gears freely rotate on the driving part 34 and do not interfere power transmission.

In one embodiment, in order to allow the sun gears 42 of the rest of the gears, a flange 344 is mounted to one end the driving part 34 and axially contacts the at least one gear set 4.The flange 344 can be a wave-shaped spring or a disk-shaped spring. By the flange 344, the sun gears 4 on the driving part 34 are located arranged and in contact with each other in sequence to increase the friction therebetween. Therefore, when the sun gear 4 rotates, the next sun gear can be driven to provide an extra assistance force when changing gears.

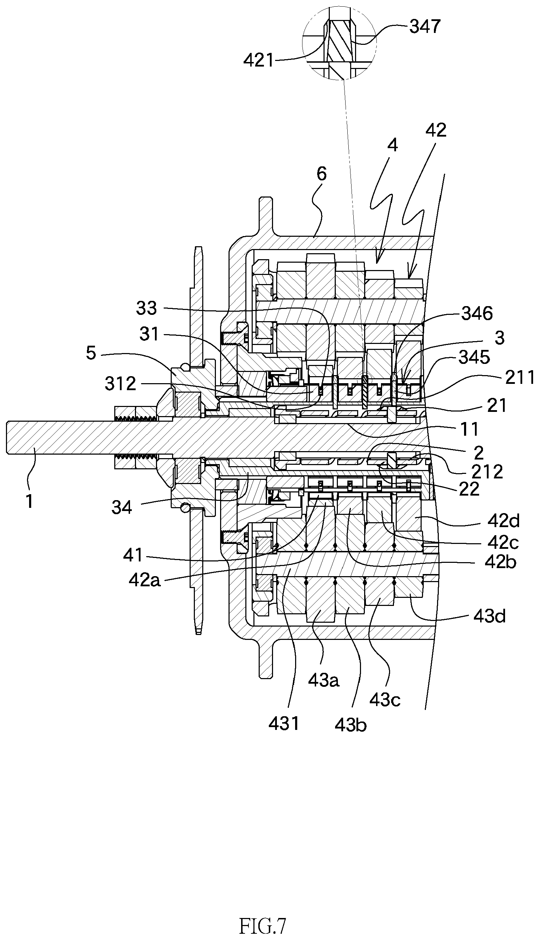

In another embodiment, which does not have the flange 344 on the driving part 34, instead, a slide 345 is located between any two adjacent gear sets 4, and the slide 345 is located corresponding to the lip 211. The slide 345 includes a contact part 346 located opposite to the lip 211, and the contact part 346 can be a resilient ring. The contact part 346 includes at least one first abutting member 347. The gear set 4 includes a second abutting member 421 which is located corresponding to the first abutting member 347. In one embodiment, the sun gear 42 includes the second abutting member 421, when the lip 211 contacts the slide 345, the slide 345 contacts the contact part 346 so that the first abutting member 347 is engaged with the second abutting member 421. Therefore, when changing gears, as shown in Fig. 7, the movable ring 21 pushes the slide 345 radially during gear changing to expand the contact part 346, so that the first abutting member 347 of the contact part 346 is in contact with the second abutting member 421 of the adjacent sun gears 42 by friction. By the rotational speed of the sun gear 42 of the lower gear is greater to provide an extra friction force to the sun gears 42 of higher gears. This makes the sun gears 42 of higher gears easily retract the pawls 31 corresponding thereto. When finishing the gear changing, the movable ring 21 moves to the sun gears 42 of the target gear to let the slide 345 not expand by the movable ring 21. The expanded contact part 346 retracts by the resilient force of itself to retract the slide 345 into the driving part 34, and the first abutting member 347 of the contact part 346 removes from the sun gears 42 that are located on two sides of the first abutting member 347 to release the connection by the friction. This arrangement does not affect the transmission between the gear set 4 and the clutch 3. By the faster rotational speed of the sun gear 42 of the lower gear to push the pawl 31 corresponding thereto to compress and deform the resilient member 32, such that the power is guided to assist retraction of the pawl 31 during gear changing.

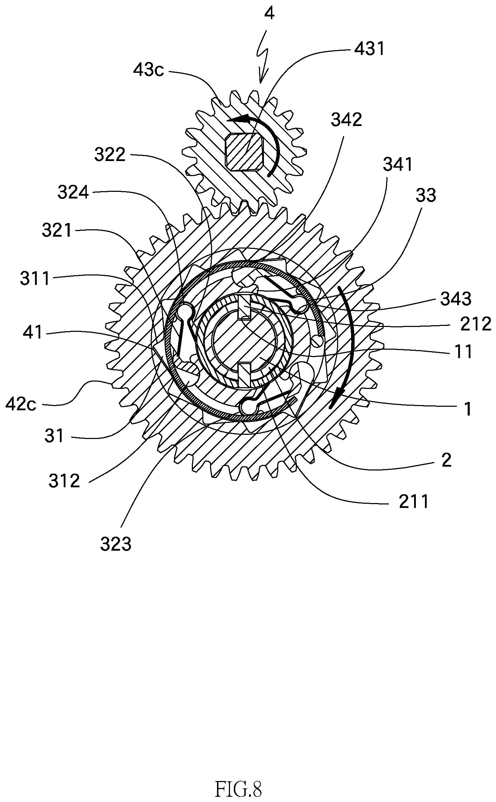

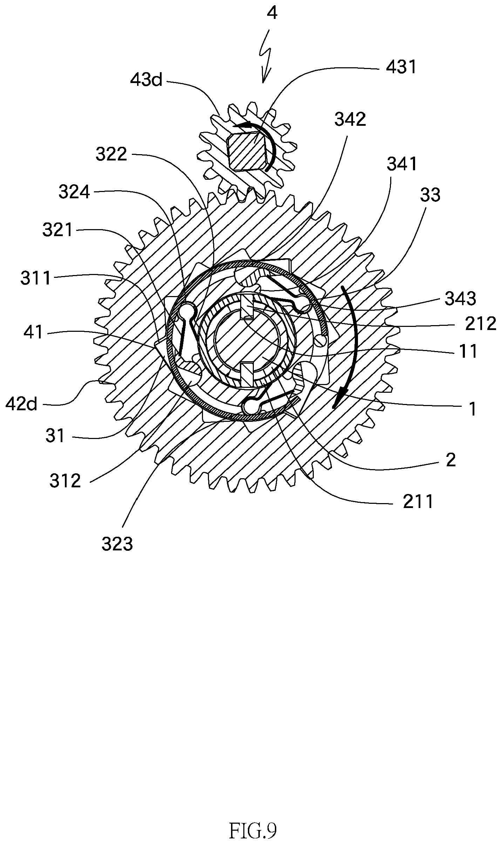

As mentioned before, when lowering the gear the movable ring 21 moves form gear four to gear three, the slide 345 is first pushed to expand the contact part 346, the first abutting member 347 frictionally contacts the second abutting member 421 of the sun gear 42. The movable ring 21 continues to move and pushes the resilient member 32 of gear three so as to expand the clip 33 by the pawl 31. Therefore, the sun gear 42c of gear three is located corresponding to the pawl 31 and is ready to be engaged with the ratchets 41. As shown in Figs. 8 and 9, which show the cross sectional view of gear three and gear four while the assistant force in the transmission status. When in transmission, as shown in Fig. 9, the driving part 34 transfers power to the pawl 31 which is located corresponding to the sun gear 42d of gear four. The planet gear 43d of gear four will rotate in opposite direction. By the non-circular structure of the mandrel 431, the planet gear 43d rotates and transfers power to the mandrel 431, so that all of the planet gears 43 on the mandrel 431 rotate at the same speed to transfer power to the sun gear 42c of gear three via the planet gear 43c of gear three as shown in Fig. 8. The planet gear 43c of gear three has more teeth than the planet gear 43d of gear four, and the number of teeth of the sun gear 42c of gear three is less than the number of teeth of the sun gear 42d of gear four, so that the rotational speed of the sun gear 42c of gear three is greater than that of the sun gear 42d of gear four. By the contact part 346, the sun gear 42c of gear three transfers power to the sun gear 42d of gear four so as to generate an extra assistant force. By the extra assistant force, the rotational speed of the sun gear 42d of gear four increases to remove the pawl 31 corresponding thereto from the ratchet 41. After the movable ring 21 pushes the pawl 31 of gear three, the movable ring 21 continues to move toward gear three. The resilient member 32 of gear four is released first, the clip 33 of gear four retracts and together with the assistant force of the contact part 346 to retract the pawl 31 into the driving part 34, and this overcomes the problem of self-lock of the pawl 31. The movable ring 21 then release the slide 345, and the contact part 346 of the slide 345 retracts and the slide 345 retracts into the driving part 34. When the movable ring 21 moves to gear three, the sun gear 42c of gear three is engaged with the pawl 31 corresponding thereto to finish the action of lowering gear.

While we have shown and described the embodiment in accordance with the present invention, it should be clear to those skilled in the art that further embodiments may be made without departing from the scope of the present invention.

## Claims

1. A flexible clutch transmission mechanism comprising:
an axle (1);
a shifter (2) and a movable ring (21) which is mounted to the shifter (2) and movable along the axle (1), the movable ring (21) including a lip (211) extending from one end thereof;
at least one clutch (3) having at least one pawl (31) which includes a resilient member (32) located corresponding to the lip (211);
at least one gear set (4) having ratchets (41) which are located corresponding to the at least one pawl (31), and
at least one clip (33) engaged with the at least one pawl (31) and located opposite to the resilient member (32), when in a non-transmission status, the at least one clip (33) is retracted inward to bias the at least one pawl (31), the lip (211) does not contact the resilient member (32) so that the at least one pawl (31) is not engaged with the ratchets (41), when in a transmission status, the lip (211) contacts the resilient member (32) of the at least one clutch (3) so that the at least one pawl (31) expands outward and is uni-directionally engaged with and drives the ratchets (41).

2. The flexible clutch transmission mechanism as claimed in claim 1, wherein the at least one pawl (31) includes an end face (311), the resilient member (32) includes a first arm (321) and a second arm (322), the first and second arms (321, 322) are connected to a bridge (323), the first arm (321) is engaged with the at least one pawl (31) and located opposite to the end face (311), when in the transmission status, the second arm (322) contacts the lip (211), the at least one pawl (31) expands outward and engaged with the ratchets (41) in the one direction.

3. The flexible clutch transmission mechanism as claimed in claim 2, wherein the at least one pawl (31) includes a notch (312), the bridge (323) includes a gap (324), the clip (33) is resiliently engaged with the notch (312) and the gap (324).

4. The flexible clutch transmission mechanism as claimed in claim 2, wherein the gear set (4) is mounted to a driving part (34), the movable ring (21) is axially movable in the driving part (34), the driving part (34) includes an axial groove (341) which is located corresponding to the clutch (3) and the movable ring (21), the second arm (322) extends into the driving part (34) via the axial grieve (341), when in the transmission status, the lip (211) contacts the second arm (322).

5. The flexible clutch transmission mechanism as claimed in claim 4, wherein a flange (344) is mounted to one end the driving part (34) and axially contacts the at least one gear set (4).

6. The flexible clutch transmission mechanism as claimed in claim 4, wherein a slide (345) is located between any two adjacent of the gear sets (4) and the slide (345) is located corresponding to the lip (211), the slide (345) includes a contact part (346) located opposite to the lip (211), the contact part (346) includes at least one first abutting member (347), the at least one gear set (4) includes a second abutting member (421) which is located corresponding to the at least one first abutting member (347), when the lip (211) contacts the slide (345), the slide (345) contacts the contact part (346) so that the at least one abutting member (347) is engaged with the second abutting member (421).

7. The flexible clutch transmission mechanism as claimed in claim 1, wherein the at least one gear set (4) includes a sun gear (42) and at least one planet gear (43), the ratchets (41) are formed in an inner periphery of the sun gear (42).

8. The flexible clutch transmission mechanism as claimed in claim 1, wherein the axle (1) includes a slot (11) defined radially in an outer periphery thereof, the movable ring (21) is movably mounted to the axle (1) and restricted in the slot (11).

9. The flexible clutch transmission mechanism as claimed in claim 1, wherein the shifter (2) includes a spiral path (22) defined in an outer periphery thereof, when the shifter (2) rotates, the spiral path (22) drives the movable ring (21).

10. The flexible clutch transmission mechanism as claimed in claim 1 further comprising a shifting device that is connected to and drives the shifter (2) so as to axially move the movable ring (21), the shifting device being driven electronically or manually, when the shifting device is driven electronically, the shifting device is a Direct Current motor or a stepper motor, when the shifting device is driven manually, the shifting device is a cable.
